# EUROPEAN PATENT SPECIFICATION

(11) **EP 2 767 466 B1**
(45) Date of publication and mention of the grant of the patent: **16.12.2020**
(21) Application number: 14151971.0
(22) Date of filing: 21.01.2014
(51) Int. Cl.: B62M 17/00

(54) **Final gear structure**
Endgültige Getriebestruktur
Structure finale d'engrenage

(30) Priority: 30.01.2013 JP 2013015273
(43) Date of publication of application: 20.08.2014
(73) Proprietor: Honda Motor Co., Ltd., Tokyo 107-8556 (JP)
(72) Inventor: Nimura, Taisuke, Saitama, 351-0193 (JP); Tsuda, Tsuyoshi, Saitama, 351-0193 (JP); Takahashi, Kosaku, Saitama, 351-0193 (JP); Higashi, Yasuhiro, Saitama, 351-0193 (JP); Sato, Katsuhiko, Saitama, 351-0193 (JP); Fukatsu, Atsushi, Saitama, 351-0193 (JP); Hayashi, Kanji, Saitama, 351-0193 (JP)
(74) Representative: Kiwit, Benedikt

(56) References cited:
- WO-A1-2008/129787
- AU-B2- 544 226
- JP-A- 2010 083 292
- JP-U- 3 042 537
- US-A1- 2003 029 041
- US-A1- 2010 078 250

## Description

The present invention relates to the final gear structure by which an output shaft member for supporting a ring gear (ring gear shaft) can be made light-weighted.

In the power transmission mechanism which transmits power of an engine to a drive wheel by way of a drive shaft, the final gear structure is provided between the drive shaft and the drive wheel.

As such final gear structure, there has been known the final gear structure which includes: a bevel gear which is joined to a distal end of a drive shaft; a ring gear which meshes with the bevel gear; and an output shaft member which is connected to the ring gear by spline engagement and on which a drive wheel is mounted (see JP 2008-241016 A), and the document JP 2010-083292 A, shows a final gear structure in accordance with the preamble of claim 1.

Further, JP 03-042537 U shows a gear structure of a power transmission of a bicycle.

In JP 2008-241016 A, the ring gear is joined to the output shaft member by spline engagement, and power is transmitted to the drive wheel from the ring gear by way of the output shaft member. Accordingly, the output shaft member is required to have rigidity which withstands power of the drive wheel and hence, the output shaft member occupies a large weight among constitutional parts of the final gear structure. To make the final gear structure light-weighted, it is desirable to make the output shaft member light-weighted.

The invention has been made in view of the above-mentioned circumstances, and it is an object of the invention to provide the final gear structure which can realize the reduction of weight thereof.

To achieve the above-mentioned object, the invention is directed to the final gear structure which includes: a shaft (63) on which a bevel gear (63a) is formed; and a ring gear (64) which meshes with the bevel gear (63a) and mounts a wheel (45) on a ring gear (64) side, wherein a stud bolt (55) for mounting the wheel (45) is provided on a ring gear (64) side, a ring gear shaft (53) which is supported on a gear case (61) is provided in a sandwiched manner between the wheel (45) and the ring gear (64), and the stud bolt (55) penetrates the ring gear shaft (53) and a disc mounting member (96), on which a brake disc (95) is mounted and which is provided between the wheel (45) and the ring gear shaft (53). The ring gear shaft (53) is rotatably supported on the gear case (61) by way of bearings (66, 67). The ring gear shaft (53) comprises a supported portion (53e), which is supported by one of the bearings (67), and a flange portion (53f), which is arranged adjacent to the supported portion (53e) and is provided on a ring gear (64) side. A cylindrical collar member (88) is fitted on the supported portion (53e) adjacent to the bearing (67), by which the supported portion (53e) is supported. An annular projecting portion (96c) is integrally formed on a surface (96b) of the disc mounting member (96), the surface (96b) being on the ring gear shaft (53) side. The annular projecting portion (96c) is brought into contact with an end surface (88a) of the collar member (88). An axial force of the stud bolt (55) is supported by the ring gear (64), the flange portion (53f), the bearing (67) by which the supported portion (53e) is supported, the cylindrical collar member (88), and the annular projecting portion (96c).

Due to such a constitution, power is transmitted to the wheel from the ring gear by way of the stud bolt and hence, the ring gear shaft can be made light-weighted.

In the above-mentioned constitution, the disc mounting member (96), on which a brake disc (95) is mounted, is provided between the wheel (45) and the ring gear shaft (53), and the stud bolt (55) penetrates the disc mounting member (96). Due to such a constitution, the disc mounting member can be fastened by the stud bolt and hence, the number of parts can be decreased.

Further, in the above-mentioned constitution, the ring gear shaft (53) and the ring gear (64) may be positioned by a knock pin (86). Due to such a constitution, positioning accuracy of the ring gear shaft and the ring gear can be enhanced, and a torque can be received by the knock pin.

In the above-mentioned constitution, the ring gear shaft (53) may have a diameter thereof decreased in a stepwise manner. Due to such a constitution, the ring gear shaft can be made further light-weighted.

Further, in the above-mentioned constitution, a pulser ring (99) may be mounted on the surface (96b) of the disc mounting member (96) on a final gear case (61) side opposite to the wheel (45). Due to such a constitution,
the pulser ring can be protected by the disc mounting member.

Still further, in the above-mentioned constitution, a first fastening member (97) which mounts a brake disc (95) on the disc mounting member (96), and a second fastening member (98) which mounts the pulser ring (99) on the disc mounting member (96) may be arranged such that the respective head portions (97a, 98a) of the first fastening member (97) and the second fastening member (98) may be arranged on the same side as the pulser ring (99) of the disc mounting member (96). Due to such a constitution, mounting of the rear wheel is not obstructed by the head portions of the first and second fastening members. It is also possible to protect the head portions of the first and second fastening members.

Still further, in the above-mentioned constitution, the ring gear shaft (53) may be made of an aluminum alloy. Due to such a constitution, the final gear structure can be made light-weighted.

According to the invention, the stud bolt for mounting the wheel on the ring gear is provided, the ring gear shaft which is supported on a gear case is provided in a sandwiched manner between the wheel and the ring gear, and the stud bolt penetrates the ring gear shaft. Accordingly, power is transmitted to the wheel from the ring gear by way of the stud bolt and hence, the ring gear shaft does not receive a large torque whereby the ring gear shaft can be made light-weighted.

The disc mounting member on which the brake disc is mounted is provided between the wheel and the ring gear shaft, and the stud bolt penetrates the disc mounting member. Accordingly, the disc mounting member can be fastened by the stud bolt and hence, the number of parts can be decreased.

Further, the ring gear shaft and the ring gear are positioned by the knock pin. Accordingly, positioning accuracy of the ring gear shaft and the ring gear can be enhanced, and a torque can be received by the knock pin.

In the above-mentioned constitution, the ring gear shaft has a diameter thereof decreased in a stepwise manner. Accordingly, the ring gear shaft can be made further light-weighted.

The pulser ring is mounted on a surface of the disc mounting member on a final gear case side opposite to the wheel. Accordingly, the pulser ring can be protected by the disc mounting member.

Still further, the first fastening member which mounts the disc brake on the disc mounting member, and the second fastening member which mounts the pulser ring on the disc mounting member are arranged such that the respective head portions of the first fastening member and the second fastening member are arranged on the same side as the pulser ring of the disc mounting member. Accordingly, mounting of the rear wheel is not obstructed by the head portions of the first and second fastening members. It is also possible to protect the head portions of the first and second fastening members.

Still further, the ring gear shaft is made of an aluminum alloy. Due to such a constitution, the final gear structure can be made light-weighted.

Fig. 1 is a left side view showing a motorcycle to which one embodiment of the final gear structure according to the invention is applied.
Fig. 2 is a cross-sectional view taken along a line II-II in Fig. 1.
Fig. 3 is a cross-sectional view showing a final gear device.
Fig. 4 is a cross-sectional view showing a final gear device of a comparison example.

Hereinafter, one embodiment of the invention is explained in conjunction with drawings. In the explanation, directions of "front", "rear", "left", "right", "up" and "down" are equal to the directions of a vehicle body unless otherwise specified. Further, in the respective drawings, symbol FR indicates the frontward direction of the vehicle body, symbol UP indicates the upward direction of the vehicle body, and symbol LE indicates the leftward direction of the vehicle body.

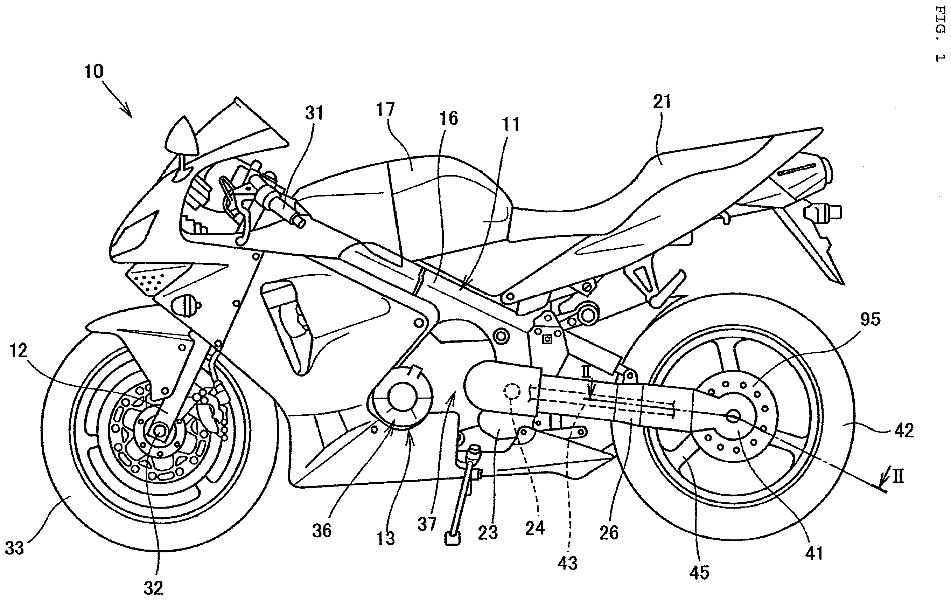

Fig. 1 is a left side view showing a motorcycle 10 to which one embodiment of the final gear structure according to the invention is applied.

The motorcycle 10 includes: a vehicle body frame 11 which constitutes a skeletal structure; a front fork 12 which is steerably mounted on a front end portion of the vehicle body frame 11; a power unit 13 which is supported on a lower portion of the vehicle body frame 11; a fuel tank 17 which is supported on an upper portion of the main frame 16 which constitutes an upper portion of the vehicle body frame 11; a seat 21 which is supported on a seat frame (not shown in the drawing) extending rearward from the upper portion of the main frame 16; and a swing arm 26 which is vertically swingably supported on a pair of left and right pivot frames 23, 23 (only the pivot frame 23 on a viewer's side shown in the drawing) which constitutes a lower portion of the vehicle body frame 11 by way of a pivot shaft 24.

A bar handle 31 is mounted on an upper end portion of the front fork 12, and a front wheel 33 is rotatably mounted on a lower end portion of the front fork 12 by way of an axle 32. The power unit 13 is constituted of an engine 36 which is a drive source, and a transmission 37 which is integrally mounted on a rear portion of the engine 36. A rear wheel 42 is rotatably supported on a rear end portion of the swing arm 26 by way of a final gear device 41, and a drive shaft 43 which transmits power to the rear wheel 42 from an output shaft of the transmission 37 by way of the final gear device 41 is housed in the inside of the swing arm 26.

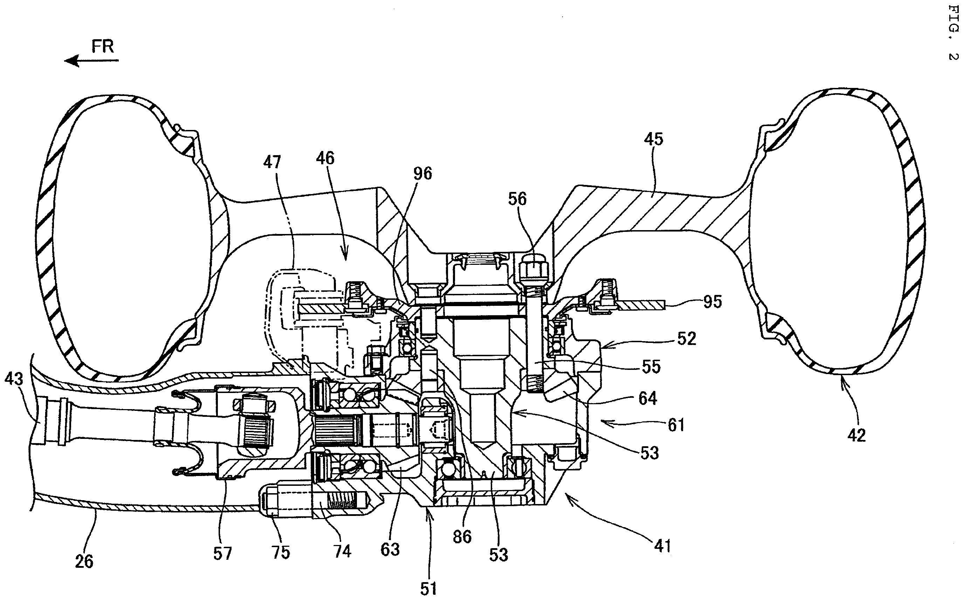

Fig. 2 is a cross-sectional view taken along a line II-II in Fig. 1.

A gear case body 51 which constitutes the final gear device 41 is mounted on a rear end portion of the swing arm 26. A ring gear shaft 53 which constitutes an output shaft member is rotatably supported by the gear case body 51 and a gear case cover 52 which is mounted on the gear case body 51 and forms a final gear case 61 together with the gear case body 51.

A constant velocity joint 57 is arranged between a rear end portion of the drive shaft 43 which is housed in the inside of the swing arm 26 and the final gear device 41.

The rear wheel 42 (to be more specific, a wheel 45 which constitutes the rear wheel 42) is mounted on a ring gear shaft 53 side in a cantilever manner using a plurality of stud bolts 55 which penetrate the ring gear shaft 53 and a plurality of wheel nuts 56. In the drawing, symbol 46 indicates a disc brake device, and the disc brake device 46 is constituted of a brake disc 95 which is integrally mounted on a rear wheel 42 side and a brake caliper 47 which applies braking to the brake disc 95.

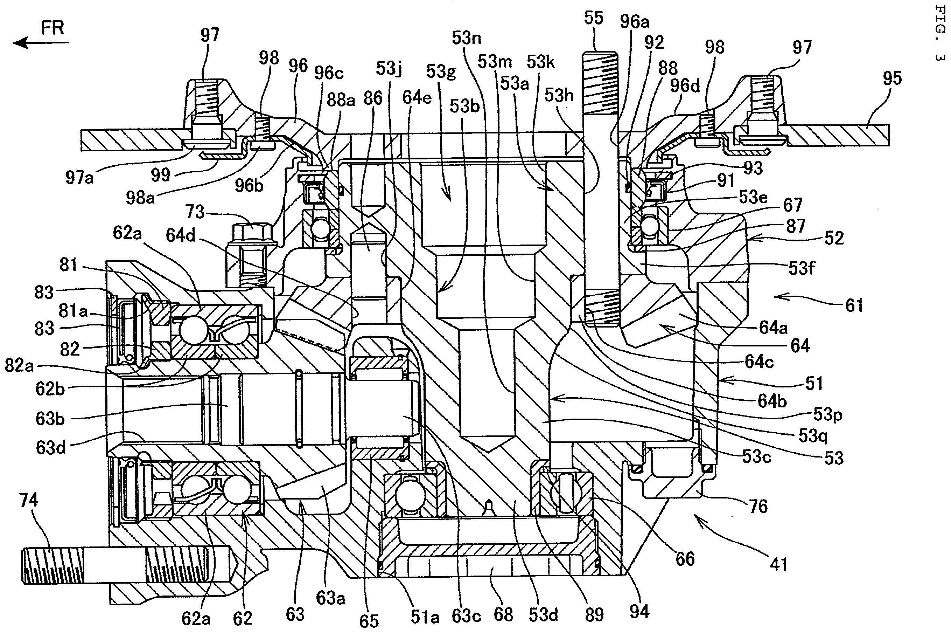

Fig. 3 is a cross-sectional view showing the final gear device 41, and is an enlarged view of an essential part shown in Fig. 2.

The final gear device 41 includes: a final gear case 61 which is constituted of the gear case body 51 and a gear case cover 52; a bevel gear shaft 63 which is rotatably supported by a front portion of the gear case body 51 by way of a bearing 62 and a needle bearing 65; a ring gear 64 which meshes with the bevel gear shaft 63; the ring gear shaft 53 which is fitted in the ring gear 64 and has both ends thereof rotatably supported by the gear case body 51 and the gear case cover 52 by way of bearings 66, 67; a plurality of stud bolts 55 each of which has one end portion thereof threadedly engaged with the ring gear 64 and which penetrates the ring gear shaft 53 in the axial direction and extends toward the rear wheel 42 side (see Fig. 2); a disc mounting member 96 on which the brake disc 95 is mounted and which protects the ring gear shaft 53 in a state where the disc mounting member 96 closes a part of an opening of the gear case cover 52; and a gear case cap 68 which is threadedly engaged with a periphery of an opening 51a of the gear case body 51 which faces one end portion of the ring gear shaft 53 for fixing the bearing 66.

The gear case body 51 and the gear case cover 52 are fastened to each other using a plurality of bolts 73. Symbol 74 indicates stud bolts for fastening the gear case body 51 to the swing arm 26 (see Fig. 2) in cooperation with a nut 75 (see Fig. 2), and symbol 76 indicates a cap member for closing a maintenance hole formed in the gear case body 51.

The bevel gear shaft 63 is a part constituted of a bevel gear 63a, and a shaft body 63b and a projecting shaft portion 63c which are integrally formed on both sides of the bevel gear 63a respectively. A female spline 63d which is joined to a male spline formed on a distal end portion of the constant velocity joint 57 (see Fig. 2) is formed on the shaft body 63b, and the projecting shaft portion 63c is supported by the needle bearing 65. The bearing 62 which supports the bevel gear shaft 63 has an outer race 62a thereof fixed to the gear case body 51 by a lock nut 81, and has inner races 62b, 62b thereof fixed to the bevel gear shaft 63 by a lock nut 82. The lock nuts 81, 82 are used for stopping rotation, and includes engaging portions 81a, 82a which are engaged with hole portions formed on a gear case 51 side or on a bevel gear shaft 63 side by being bent after the lock nuts 81, 82 are fastened. Symbol 83 indicates a seal member, and symbol 84 indicates a retainer ring which prevents the removal of the seal member 83 from the gear case body 51.

The ring gear 64 is an integral body formed of a gear portion 64a and a disc portion 64b which is formed on an inner peripheral portion of the gear portion 64a. In the disc portion 64b, a plurality of female threads 64c into which the stud bolts 55 are threaded, a knock pin fitting hole 64d into which a knock pin 86 is fitted, and a fitting hole 64e into which the ring gear shaft 53 is fitted are formed.

The ring gear shaft 53 is made of an aluminum alloy, and is constituted of a large-diameter portion 53a, an intermediate large-diameter portion 53b, an intermediate small-diameter portion 53c, and a small-diameter portion 53d such that outer diameters of these portions are sequentially decreased from an end portion of the ring gear shaft 53 on a bearing 67 side. A hollow portion 53g is formed in the large-diameter portion 53a, the intermediate large-diameter portion 53b, and the intermediate small-diameter portion 53c. In this manner, by forming the ring gear shaft 53 such that the outer diameter of the ring gear shaft 53 is gradually decreased in a stepwise manner, and by forming the hollow portion 53g which is constituted of a large-diameter hole portion 53k, an intermediate-diameter hole portion 53m, and a small-diameter portion 53n sequentially from an end portion of the ring gear shaft 53 on a large-diameter portion 53a side, it is possible to largely reduce a weight of the ring gear shaft 53 along with the use of an aluminum alloy as a material of the ring gear shaft 53.

The large-diameter portion 53a is a portion in which through holes 53h through which the stud bolts 55 pass and a knock pin fitting hole 53j into which the knock pin 86 is fitted are formed. The large-diameter portion 53a includes a supported portion which is supported by the bearing 67, and a flange portion 53f which is arranged adjacent to the supported portion 53e and is provided on a ring gear 64 side. Symbol 87 indicates a gap adjusting shim interposed between the bearing 67 and the flange portion 53f.

A cylindrical collar member 88 is fitted on the supported portion 53e adjacent to the bearing 67, and a seal member 91 is arranged between the collar member 88 and the gear case cover 52. Symbol 92 indicates an O-ring disposed in an annular groove on a supported portion 53e side for applying sealing between the supported portion 53e and the collar member 88, and symbol 93 indicates a retainer ring for preventing the removal of the seal member 91.

The intermediate large-diameter portion 53b is fitted into the fitting hole 64e formed on the ring gear 64 by press fitting. The ring gear 64 is fixed to the ring gear shaft 53 by such press fitting. At a portion where an outer peripheral surface of the intermediate large-diameter portion 53b and an outer surface of the intermediate small-diameter portion 53c are connected to each other in the axial direction, a chamfered portion 53p on an intermediate large-diameter portion 53b side and an annular arcuate portion 53q on an intermediate small-diameter portion 53c side are formed adjacent to each other. In this manner, by forming the chamfered portion 53p and the annular arcuate portion 53q, the ring gear 64 can be easily fitted on the intermediate large-diameter portion 53b thus enhancing the operability of mounting of the final gear device 41. A collar member 89 made of steel is fitted on the small-diameter portion 53d by press fitting, and the small-diameter portion 53d is supported by the bearing 66 by way of the collar member 89. Due to such a constitution, the durability of the final gear device 41 can be enhanced. Symbol 94 indicates a gap adjusting shim arranged between the bearing 66 and the collar member 89.

The stud bolts 55 are threadedly engaged with the ring gear 64, penetrate the ring gear shaft 53 and also penetrate through holes 96a formed in the disc mounting member 96 on which the brake disc 95 is mounted. An annular projecting portion 96c is integrally formed on one side surface 96b of the disc mounting member 96 on a final gear device 41 side, and the annular projecting portion 96c is brought into contact with an end surface 88a of the collar member 88. By forming such an annular projecting portion 96c, when the rear wheel 42 (see Fig. 2) is mounted on the other side surface 96d of the disc mounting member 96 using the stud bolts 55 and the wheel nuts 56 (see Fig. 2), an axial force of the stud bolts 55 can be supported by the ring gear 64, the flange portion 53f of the ring gear shaft 53, the shim 87, the inner race of the bearing 67, the collar member 88, and the annular projecting portion 96c. Accordingly, there is no possibility that the above-mentioned axial force is supported by the whole large-diameter portion 53a of the ring gear shaft 53 made of an aluminum alloy and hence, an axial force can be made stable. Further, it is possible to protect the ring gear shaft 53 made of an aluminum alloy from external interference objects by the inner peripheral portion of the disc mounting member 96.

The brake disc 95 is mounted on a surface of the disc mounting member 96 on a final gear device 41 side using a plurality of bolts 97, and a pulser ring 99 is mounted on one side surface 96b on the same side as the brake disc 95 using a plurality of bolts 98 in a state where the pulser ring 99 covers head portions of the bolts 97. The pulser ring 99 is a rotation detecting member for acquiring the number of rotation and a rotational speed by detecting the rotation of the rear wheel 42 by forming a pair with a rotation sensor not shown in the drawing.

In this manner, by arranging the pulser ring 99 on a final gear device 41 side of the disc mounting member 96, it is possible to protect the pulser ring 99 from flying pebbles or the like on a rear wheel 42 side by the disc mounting member 96.

Further, by arranging the head portions of the bolts 97, 98 on a one-side-surface 96b side of the disc mounting member 96, there exists no possibility that the head portions of the bolts 97, 98 become an obstacle in mounting the rear wheel 42 on the disc mounting member 96.

The above-mentioned final gear device 41 adopts the structure where the ring gear 64 is fitted on and fixed to the ring gear shaft 53, one ends of the stud bolts 55 by which the rear wheel 42 is mounted are threadedly engaged with the ring gear 64, and the stud bolts 55 are made to penetrate the ring gear shaft 53 and the disc mounting member 96. Accordingly, it is possible to transmit most of power from a bevel gear shaft 63 side to the ring gear 64, the stud bolts 55 and the rear wheel 42 sequentially. Accordingly, power transmitted to the ring gear shaft 53 from the ring gear 64 by way of the stud bolts 55 and the knock pin 86 can be suppressed to a small value and hence, a strength of the ring gear shaft 53 can be lowered whereby it is possible to manufacture the ring gear shaft 53 using an aluminum alloy which is light-weighted.

Further, unlike the conventional constitution, it is unnecessary to form the female spline and the male spline on the ring gear and the output shaft member respectively and hence, a manufacturing cost of the ring gear 64 and the ring gear shaft 53 of this embodiment can be reduced.

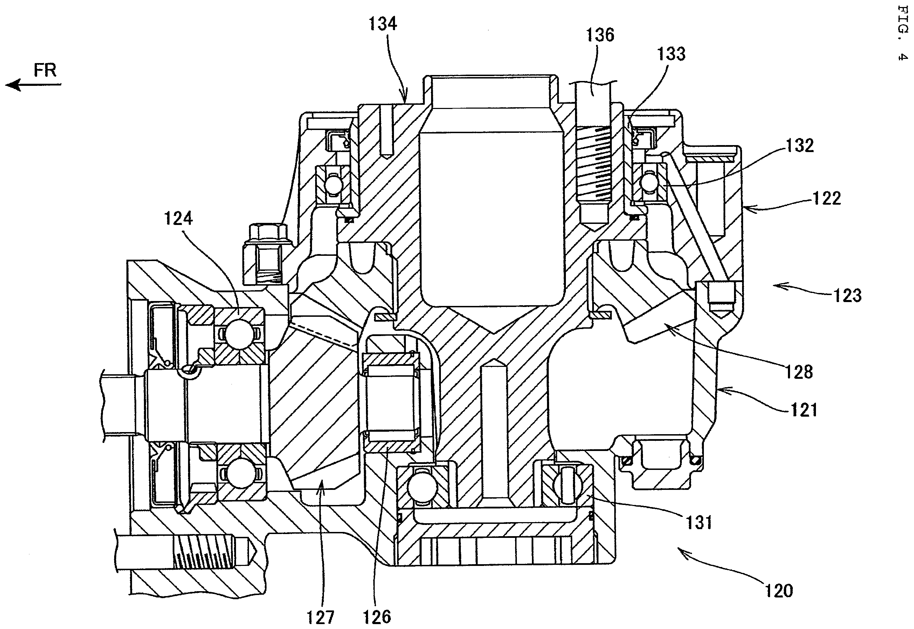

Fig. 4 is a cross-sectional view showing a final gear device 120 according to a comparison example.

The final gear device 120 includes: a final gear case 123 which is constituted of a gear case body 121 and a gear case cover 122; a bevel gear shaft 127 which is rotatably supported on the gear case body 121 by way of a bearing 124 and a needle bearing 126; a ring gear 128 which meshes with the bevel gear shaft 127; an output shaft member 134 which is joined to the ring gear 128 by spline engagement, has one end thereof rotatably supported by the final gear case 123 by way of a bearing 131, and has the other end thereof rotatably supported by the final gear case 123 by way of a bearing 132 and a collar member 133; and a plurality of stud bolts 136 mounted on the output shaft member 134. A drive wheel (not shown in the drawing) is mounted on the output shaft member 134 by the stud bolts 136 and wheel nuts (not shown in the drawing).

Power from the bevel gear shaft 127 is transmitted to the drive wheel sequentially by way of the ring gear 128, the output shaft member 134, the stud bolts 136. Accordingly, the above-mentioned bevel gear shaft 127, ring gear 128, output shaft member 134 and stud bolts 136 are required to have strength which allows the transmission of power. Further, it is necessary to form a female spline and a male spline on the ring gear 128 and the output member 134 by spline engagement respectively.

Among the above-mentioned respective constitutional parts of the final gear device 120, the largest output shaft member 134 adopts steel as a material thereof for ensuring the above-mentioned strength and is the heaviest part. Accordingly, a weight of the final gear device 120 becomes large and, eventually, a weight of a vehicle on which the final gear device 120 is mounted becomes also large.

With respect to the power transmission structure from the ring gear 128 to the drive wheel in the above-mentioned final gear device 120, this embodiment aims at the reduction of weight of the vehicle by improving such power transmission structure to the power transmission structure of the final gear device 41 shown in Fig. 1 to Fig. 3.

As shown in Fig. 2 and Fig. 3 explained above, the final gear structure includes the bevel gear shaft 63 which constitutes the shaft on which the bevel gear 63a is formed, and the ring gear 64 which meshes with the bevel gear 63a and mounts the wheel 45 which constitutes the rear wheel 42 on a ring gear 64 side, wherein the stud bolt 55 for mounting the wheel 45 on the ring gear 64 side is provided, the ring gear shaft 53 which is supported on the final gear case 61 which constitutes a gear case is provided in a sandwiched manner between the wheel 45 and the ring gear 64, and the stud bolt 55 penetrates the ring gear shaft 53. Due to such a constitution, power is transmitted to the wheel 45 from the ring gear 64 by way of the stud bolt 55 and hence, the ring gear shaft 53 does not receive a large torque whereby strength of the ring gear shaft 53 can be lowered. Accordingly, it is possible to make the ring gear shaft 53 light-weighted by decreasing a diameter of the ring gear shaft 53 or a changing of a material of the ring gear shaft 53 to a light material (aluminum alloy).

The disc mounting member 96 on which the brake disc 95 is mounted is provided between the wheel 45 and the ring gear shaft 53, and the stud bolt 55 penetrates the disc mounting member 96. Accordingly, the disc mounting member 96 can be fastened by the stud bolt 55 and hence, it is unnecessary to particularly provide a mounting member for mounting the disc mounting member 96 on the ring gear shaft 53 whereby the number of parts can be decreased.

Further, the ring gear shaft 53 and the ring gear 64 are positioned by a knock pin 86. Accordingly, positioning accuracy of the ring gear shaft 53 and the ring gear 64 can be enhanced, and a torque can be received by the knock pin 86.

The ring gear shaft 53 has a diameter thereof gradually decreased in a stepwise manner. Accordingly, the ring gear shaft 53 can be made further light-weighted.

Further, the pulser ring 99 is mounted on one side surface 96b of the disc mounting member 96 on a final gear case 61 side opposite to the wheel 45. Accordingly, the pulser ring 99 can be protected by the disc mounting member 96.

Still further, the bolt 97 which constitutes the first fastening member which mounts the brake disc 95 on the disc mounting member 96 and the bolt 98 which constitutes the second fastening member which mounts the pulser ring 99 on the disc mounting member 96 are arranged such that the respective head portions 97a, 98a of the bolt 97 and the bolt 98 are arranged on the same side as the pulser ring 99 of the disc mounting member 96. Accordingly, mounting of the rear wheel 42 is not obstructed by the head portions 97a, 98a of the bolts 97, 98. It is also possible to protect the head portions 97a, 98a of the bolts 97, 98 from flying pebbles or the like by the disc mounting member 96.

Still further, the ring gear shaft 53 is made of an aluminum alloy. Accordingly, the ring gear shaft 53 can be made light-weighted.

The above-mentioned embodiment merely exemplifies one mode of the invention, and modifications and applications can be desirably made without departing from the scope of the invention as defined in the appended claims.

For example, in the above-mentioned embodiment, the ring gear shaft 53 shown in Fig. 3 is made of an aluminum alloy. However, the invention is not limited to such a material, and other metals having small specific gravity (titanium, a titanium alloy or the like) can be also used as a material of the ring gear shaft 53.

Further, as shown in Fig. 1, the final gear device 41 is adopted by the motorcycle 10. However, the application of the final gear device 41 is not limited to such an application, and the final gear device 41 may be adopted by other saddle-ride-type vehicles, industrial vehicles or power transmission devices provided to apparatuses other than vehicles.

41: final gear device
45: wheel
46: disc brake device
53: ring gear shaft
55: stud bolt
61: final gear case (gear case)
63: bevel gear shaft (shaft)
63a: bevel gear
64: ring gear
86: knock pin
95: brake disc
96: disc mounting member
96b: one side surface (surface)
97, 98: bolt (fastening member)
97a, 98a: head portion
99: pulser ring

## Claims

1. A final gear structure comprising:
a shaft (63), on which a bevel gear (63a) is formed;
a ring gear (64), which meshes with the bevel gear (63a) and mounts a wheel (45) on a ring gear (64) side,
wherein a stud bolt (55) for mounting the wheel (45) is provided on a ring gear (64) side;
a ring gear shaft (53), which is supported on a gear case (61), is provided in a sandwiched manner between the wheel (45) and the ring gear (64),
wherein the stud bolt (55) penetrates the ring gear shaft (53) and a disc mounting member (96), on which a brake disc (95) is mounted and which is provided between the wheel (45) and the ring gear shaft (53),
wherein the ring gear shaft (53) which is fitted in the ring gear (64) and has both ends thereof rotatably supported on the gear case (61) by way of bearings (66, 67),
wherein the ring gear shaft (53) comprises a supported portion (53e), which is supported by one of the bearings (67), and a flange portion (53f), which is arranged adjacent to the supported portion (53e) and is provided on a ring gear (64) side,
and **characterised in that** a cylindrical collar member (88) is fitted on the supported portion (53e) adjacent to the bearing (67), by which the supported portion (53e) is supported,
wherein an annular projecting portion (96c) is integrally formed on a surface (96b) of the disc mounting member (96), the surface (96b) being on the ring gear shaft (53) side,
wherein the annular projecting portion (96c) is brought into contact with an end surface (88a) of the collar member (88), and
wherein an axial force of the stud bolt (55) is supported by the ring gear (64), the flange portion (53f), the bearing (67) by which the supported portion (53e) is supported, the cylindrical collar member (88), and the annular projecting portion (96c).

2. The final gear structure according to claim 1,
wherein the ring gear shaft (53) and the ring gear (64) are positioned by a knock pin (86).

3. The final gear structure according to any one of claims 1 or 2, wherein the ring gear shaft (53) has a diameter thereof gradually decreased in a stepwise manner.

4. The final gear structure according to any one of claims 1 to 3, wherein a pulser ring (99) is mounted on the surface (96b) of the disc mounting member (96) on a final gear case (61) side opposite to the wheel (45).

5. The final gear structure according to claim 4,
wherein a first fastening member (97), which mounts the brake disc (95) on the disc mounting member (96), and a second fastening member (98), which mounts the pulser ring (99) on the disc mounting member (96), are arranged such that the respective head portions (97a, 98a) of the first fastening member (97) and the second fastening member (98) are arranged on the same side as the pulser ring (99) of the disc mounting member (96).

6. The final gear structure according to any one of claims 1 to 5, wherein the ring gear shaft (53) is made of an aluminum alloy.

## Patentansprüche

1. Endgetriebestruktur, die aufweist:
eine Welle (63), auf der ein Kegelrad (63a) ausgebildet ist;
ein Hohlrad (64), das in das Kegelrad (63a) eingreift und ein Rad (45) an einer Seite des Hohlrads (64) befestigt,
wobei ein Gewindebolzen (55) zum Befestigen des Rads (45) an einer Seite des Hohlrads (64) vorgesehen ist;
eine Hohlradwelle (53), die an einem Getriebegehäuse (61) gehalten wird, zwischen dem Rad (45) und dem Hohlrad (64) dazwischen angeordnet vorgesehen ist,
wobei der Gewindebolzen (55) durch die Hohlradwelle (53) und ein Scheibenbefestigungselement (96) hindurchgeht, an dem eine Bremsscheibe (95) befestigt ist und das zwischen dem Rad (45) und der Hohlradwelle (53) vorgesehen ist,
wobei die Hohlradwelle (53), in das Hohlrad (64) eingesetzt ist und beide Enden davon rotierbar am Getriebegehäuse (61) mittels Lager (66, 67) gehalten werden,
wobei die Hohlradwelle (53) einen gehaltenen Bereich (53e) aufweist, der von einem der Lager (67) gehalten wird, und einen Flanschbereich (53f), der benachbart zum gehaltenen Bereich (53c) angeordnet ist und an einer Seite des Hohlrads (64) vorgesehen ist,
und **dadurch gekennzeichnet, dass**
ein zylindrisches Manschettenelement (88) an dem gehaltenen Bereich (53e) neben dem Lager (67) eingepasst ist, durch das der gehaltene Bereich (53c) gehalten wird,
wobei ein ringförmiger Vorsprungsbereich (96c) integral an einer Fläche (96b) des Scheibenbefestigungselements (96) ausgebildet ist, wobei sich die Fläche (96b) an der Seite der Hohlradwelle (53) befindet,
wobei der ringförmige Vorsprungsbereich (96c) in Kontakt mit einer Endfläche (88a) des Manschettenelements (88) gebracht wird, und
wobei eine axiale Kraft des Gewindebolzens (55) von dem Hohlrad (64), dem Flanschbereich (53f), dem Lager (67), von dem der gehaltene Bereich (53c) gehalten wird, dem zylindrischen Manschettenelement (88) und dem ringförmigen Vorsprungsbereich (96c) gehalten wird.

2. Endgetriebestruktur nach Anspruch 1,
wobei die Hohlradwelle (53) und das Hohlrad (64) durch einen Auswerferstift (86) positioniert werden.

3. Endgetriebestruktur nach einem der Ansprüche 1 oder 2,
wobei die Hohlradwelle (53) einen allmählich schrittweise abnehmenden Durchmesser davon hat.

4. Endgetriebestruktur nach einem der Ansprüche 1 bis 3, wobei ein Impulsring (99) an der Fläche (96b) des Scheibenbefestigungselements (96) an einer Seite des Endgetriebegehäuses (61) gegenüberliegend zum Rad (45) befestigt ist.

5. Endgetriebestruktur nach Anspruch 4, wobei ein erstes Befestigungselement (97), das die Scheibenbremse (95) an dem Scheibenbefestigungselement (96) befestigt, und ein zweites Befestigungselement (98), das den Impulsring (99) an dem Scheibenbefestigungselement (96) befestigt, so angeordnet sind, dass die jeweiligen Kopfbereiche (97a, 98a) des ersten Befestigungselements (97) und des zweiten Befestigungselements (98) an der gleichen Seite wie der Impulsring (99) des Scheibenbefestigungselements (96) angeordnet sind.

6. Endgetriebestruktur nach einem der Ansprüche 1 bis 5,
wobei die Hohlradwelle (53) aus einer Aluminiumlegierung hergestellt ist.

## Revendications

1. Structure finale d'engrenage comprenant :
un arbre (63) sur lequel un engrenage conique (63a) est formé ;
une couronne (64) qui s'engrène avec l'engrenage conique (63a) et permet de monter une roue (45) du côté de la couronne (64),
dans laquelle un goujon (55) pour monter la roue (45) est prévu du côté de la couronne (64) ;
un arbre de couronne (53) qui est supporté sur un carter d'engrenage (61), est prévu en sandwich entre la roue (45) et la couronne (64),
dans laquelle le goujon (55) pénètre dans l'arbre de couronne (53) et un élément de montage de disque (96), sur lequel un disque de frein (95) est monté et qui est prévu entre la roue (45) et l'arbre de couronne (53),
dans laquelle l'arbre de couronne (53) qui est monté dans la couronne (64) et a ses deux extrémités supportées, en rotation, sur le carter d'engrenage (61) au moyen de paliers (66, 67),
dans laquelle l'arbre de couronne (53) comprend une partie supportée (53e), qui est supportée par l'un des paliers (67), et une partie de bride (53f) qui est agencée de manière adjacente à la partie supportée (53e) et est prévue du côté de la couronne (64),
et **caractérisée en ce que** :
un élément de collier cylindrique (88) est monté sur la partie supportée (53e) adjacente au palier (67), grâce auquel la partie supportée (53e) est supportée,
dans laquelle une partie en saillie annulaire (96c) est formée de manière solidaire, sur une surface (96b) de l'élément de montage de disque (96), la surface (96b) étant du côté de l'arbre de couronne (53),
dans laquelle la partie en saillie annulaire (96c) est amenée en contact avec une surface d'extrémité (88a) de l'élément de collier (88), et
dans laquelle une force axiale du goujon (55) est supportée par la couronne (64), la partie de bride (53f), le palier (67) grâce auquel la partie supportée (53e) est supportée, l'élément de collier cylindrique (88) et la partie en saillie annulaire (96c).

2. Structure finale d'engrenage selon la revendication 1,
dans laquelle l'arbre de couronne (53) et la couronne (64) sont positionnés par une goupille (86).

3. Structure finale d'engrenage selon l'une quelconque des revendications 1 ou 2, dans laquelle l'arbre de couronne (53) a son diamètre progressivement réduit par palier.

4. Structure finale d'engrenage selon l'une quelconque des revendications 1 à 3, dans laquelle une bague de générateur d'impulsions (99) est montée sur la surface (96b) de l'élément de montage de disque (96) du côté du carter d'engrenage final (61) opposé à la roue (45).

5. Structure finale d'engrenage selon la revendication 4,
dans laquelle le premier élément de fixation (97), qui permet de monter le disque de frein (95) sur l'élément de montage de disque (96), et un second élément de fixation (98) qui permet de monter la bague de générateur d'impulsions (99) sur l'élément de montage de disque (96), sont agencés de sorte que les parties de tête (97a, 98a) respectives du premier élément de fixation (97) et du second élément de fixation (98) sont agencées du même côté que la bague de générateur d'impulsions (99) de l'élément de montage de disque (96).

6. Structure finale d'engrenage selon l'une quelconque des revendications 1 à 5, dans laquelle l'arbre de couronne (53) est réalisé à partir d'un alliage d'aluminium.
